(19) Europäisches Patentamt
European Patent Office
Office européen des brevets

(11) EP 4 600 008 A1

(12) EUROPEAN PATENT APPLICATION

(43) Date of publication:
13.08.2025 Bulletin 2025/33

(21) Application number: 24156461.6

(22) Date of filing: 08.02.2024

(51) International Patent Classification (IPC):
***B29B 17/02*** *(2006.01)* ***B29B 17/04*** *(2006.01)*
*B29B 17/00 (2006.01)* *B29K 69/00 (2006.01)*
*B29L 31/34 (2006.01)*

(52) Cooperative Patent Classification (CPC):
**B29B 17/02; B29B 17/0412;** B29B 17/0026; B29B 2017/0203; B29B 2017/042; B29K 2069/00; B29L 2031/3481

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Covestro LLC**
**Pittsburgh, PA 15205 (US)**

(72) Inventor: **The designation of the inventor has not yet been filed**

(74) Representative: **Levpat**
**c/o Covestro AG**
**Gebäude K12**
**51365 Leverkusen (DE)**

# (54) SACRIFICIAL SECTION FOR MORE SUSTAINABLE PLASTIC PARTS

(57) Provided is a formed plastic part comprising a sacrificial section; and a recyclable section, wherein the sacrificial section and the recyclable section are separated by at least one stress concentrator cut into the formed plastic part, and wherein the at least one stress concentrator is arranged in a pattern selected from the group consisting of a line, a groove, a triangle, a square, a rectangle, a pentagon, a hexagon, a heptagon, an octagon, a nonagon, a decagon, a rhombus, and a circle. Also provided is a process of recycling the formed plastic part, the process comprising: (a1) separating the sacrificial section from the recyclable section of the formed plastic part and discarding the sacrificial section; (a2) removing and discarding the at least one protrusion, if present, (b) mechanically shredding the recyclable section to obtain plastic fragments; (c) at least one of cleaning, sanitizing, and sorting the plastic fragments; (d) optionally, subjecting the plastic fragments to at least one of pyrolysis and chemolysis to obtain a monomer; (e) polymerizing the monomer to produce a recyclate polymer, and (f) optionally, pelletizing the recyclate polymer.

EP 4 600 008 A1

## Description

## FIELD OF THE INVENTION

The present invention relates in general to plastics recycling and more specifically to part design and processes to facilitate polycarbonate recycling.

## BACKGROUND OF THE INVENTION

Companies are trying to be more circular with their products and a number have made public announcements of their efforts to achieve those goals.

In the production of post-consumer recyclate resins, manufacturers replace a portion of the feedstock of new polymerized polycarbonate with recycled material. This is usually collected, cleaned, and ground back into pellets and re-processed with virgin resin. These grades are marketed as having a certain percentage of recycled content, which customers, especially in the electrical, electronic, and household appliance (EE&A) industries desire for many reasons. Another trend in these industries is to shrink, integrate, and combine assemblies and electronic components. Slimmer is better from a product point of view in these industries. Often manufacturers are trying to directly embed LEDs, sensors, microphones, etc., within a film or a plastic part. Although reducing the manufacturer's costs, this trend does not inherently reduce downstream recycling costs and may, in fact, increase recycling costs to the point of making it economically unfeasible to recycle.

For example, U.S. Pat. Pub. 2023-0245913 in the name of Zaato et al., is directed to a laminate structure and a method used in the manufacturing of flexible electronics or microelectronic devices. The laminate structure includes a rigid substrate, a flexible microelectronics structure comprising and a debonding structure provided between the rigid substrate and the flexible microelectronics structure. The debonding structure contains at least one debonding layer made of a non-metallic inorganic material. The laminate structure has first and second peeling surfaces, where at least one of the peeling surfaces corresponding to a surface of the debonding structure or to a surface within the debonding structure. The first and second peeling surfaces are peelable by a debonding force resulting from a mechanical delamination and/or from a pressurized fluid delamination, allowing separating the flexible microelectronic device from the rigid substrate.

The use of screws is a widespread practice in the engineering plastics industries. Where repeated assembly and disassembly are needed, it is common to overmold metal-threaded inserts which become integral to the part thereafter. These inserts allow the male threads of the screw to engage with the female threads of the insert to create a joint. Printed circuit boards, batteries, etc., advantageously may be protected or fastened by this new part. A disadvantage is that the metal pieces pose a hinderance to mechanical recycling because they must be removed prior to physical shredding of the part. A process to remove these metal pieces easily, and one that is specific to polycarbonates, would prove useful to the plastics industry as it can enable larger volumes of new post-consumer recyclate resin (PCR) polycarbonate feedstocks.

To reduce or eliminate problems, therefore, a need exists in the art for methods to remove hindrances to recycling of plastic parts and thereby increase circularity in the plastics industry.

## SUMMARY OF THE INVENTION

Accordingly, the present invention obviates problems inherent in the art by providing a design element that localizes all the electronic pieces, circuit boards, etc., into a "sacrificial" section of the part so that during recycling, it can be broken off physically or mechanically and disposed of in a landfill. In some cases, the invention may involve introducing mechanical fatigue on a designated weak point to segment the part. If the sacrifical section represents 15% of the part's total volume, the remaining 85% of the part's total volume is available to be recycled. Maximizing the amount of the recyclable portion of particular importance when designing a part solely for recyclability, instead of function. However, special care must be taken to design the part properly so that it is still strong enough for its intended use.

The present invention provides a stress concentrator, so that metal-threaded inserts can be broken away from the remainder of the plastic, thus only losing a small percentage of the plastic mass and retaining the majority. The present inventors have examined several variations to create the stress concentrator.

In the first variation, a pattern of a plurality of openings surrounds the boss. A "boss", as used herein is a cylindrical projection with an opening for attachment hardware and acts as an attachment point in many designs. The openings, which need not completely extend through the part, are placed preferably in a hexagonal pattern, equally spaced around the boss by approximately the same diameter as the boss. This plurality of openings preferably will include weld lines and will act as a crack initiation site when a high-speed impact occurs to the boss feature. Ideally, this plurality of openings does not cause premature failure of the part during its useful life. This is a delicate balance.

In the second variation, a counter bored opening on the reverse side of the part was at the part's front cosmetic surface when viewed from above. This will not allow moisture to pass through the opening, whereas in the first variation

would. Preferably, this opening is sized and shaped to be approximately the same as that of the inner diameter of the boss on the top side. The depth is sufficient to allow moldability of the boss without creating too thin of a section inside.

A third variation uses a common technique that mitigates sink as the concentrator. Where a boss is large, it is possible to design a "trench"-like depression around the boss to ensure the reverse side looks cosmetically pleasing with no read-through or sink in contrast to a counter bore hole which would be a cosmetic drawback on show surfaces. This trench would be similar to the opening pattern, but continuous and fully circular in shape around the boss.

It is understood that the invention disclosed and described in this specification is not limited to the embodiments summarized in this Summary.

## BRIEF DESCRIPTION OF THE FIGURES

The present invention will now be described for purposes of illustration and not limitation in conjunction with the figures, wherein:

FIG. 1 shows a 4 in. (10.2 cm) x 6 in. (15.2 cm) formed plastic part with bosses used in the Examples;

FIG. 2A illustrates drilling the rear side of the formed plastic part shown in FIG. 1;

FIG. 2B depicts a hammer strike with a solid punch to the top of the formed plastic part shown in FIG. 1;

FIG. 2C shows a hammer strike with a solid punch to the rear of formed plastic part shown in FIG. 1;

FIG. 2D illustrates a hammer strike with a shear blade to the top of the formed plastic part shown in FIG. 1;

FIG. 2E is a photograph of the shear blade used in the instant Examples;

FIG. 3A depicts the results after drilling the rear side of the formed plastic part shown in FIG. 1 where the part was made of PC-A;

FIG. 3B shows the results after drilling the rear side of the formed plastic part shown in FIG. 1 where the part was made of PC-B;

FIG. 3C illustrates the results after drilling the rear side of the formed plastic part shown in FIG. 1 where the part was made of PC-C;

FIG. 4A depicts the results after a hammer strike with a solid punch to the top of the formed plastic part shown in FIG. 1, where the part was made of PC-A;

FIG. 4B shows the results after a hammer strike with a solid punch to the top of the formed plastic part shown in FIG. 1, where the part was made of PC-B;

FIG. 4C illustrates the results after a hammer strike with a solid punch to the top of the formed plastic part shown in FIG. 1, where the part was made of PC-C;

FIG. 5A depicts the results after a hammer strike with a solid punch to the rear of the formed plastic part shown in FIG. 1, where the part was made of PC-A;

FIG. 5B shows the results after a hammer strike with a solid punch to the rear of the formed plastic part shown in FIG. 1, where the part was made of PC-B;

FIG. 5C illustrates the results after a hammer strike with a solid punch to the rear of the formed plastic part shown in FIG. 1, where the part was made of PC-C;

FIG. 6A depicts the results after a hammer strike with a shear blade to the top of the formed plastic part shown in FIG. 1, where the part was made of PC-A;

FIG. 6B shows the results after a hammer strike with a shear blade to the top of the formed plastic part shown in FIG. 1, where the part was made of PC-B;

FIG. 6C illustrates the results after a hammer strike with a shear blade to the top of the formed plastic part shown in FIG. 1, where the part was made of PC-C;

FIG. 7A depicts the results after a hammer strike-30°C with a solid punch to the rear of the formed plastic part shown in FIG. 1, where the part was made of PC-A;

FIG. 7B illustrates the results after a hammer strike-30°C with a solid punch to the rear of the formed plastic part shown in FIG. 1, where the part was made of PC-B;

FIG. 7C shows the results after a hammer strike-30°C with a solid punch to the rear of the formed plastic part shown in FIG. 1, where the part was made of PC-C; and

FIG. 8 illustrates a sacrificial section being separated by breaking at a linear stress concentrator.

## DETAILED DESCRIPTION OF THE INVENTION

The present invention will now be described for purposes of illustration and not limitation. Except in the operating examples, or where otherwise indicated, all numbers expressing quantities, percentages, and so forth in the specification are to be understood as being modified in all instances by the term "about."

Any numerical range recited in this specification is intended to include all sub-ranges of the same numerical precision subsumed within the recited range. For example, a range of "1.0 to 10.0" is intended to include all sub-ranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited in this specification is intended to include all lower numerical limitations subsumed therein and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such sub-ranges would comply with the requirements of 35 U.S.C. §112(a), and 35 U.S.C. §132(a). The various embodiments disclosed and described in this specification can comprise, consist of, or consist essentially of the features and characteristics as variously described herein.

Any patent, publication, or other disclosure material identified herein is incorporated by reference into this specification in its entirety unless otherwise indicated, but only to the extent that the incorporated material does not conflict with existing definitions, statements, or other disclosure material expressly set forth in this specification. As such, and to the extent necessary, the express disclosure as set forth in this specification supersedes any conflicting material incorporated by reference herein. Any material, or portion thereof, that is said to be incorporated by reference into this specification, but which conflicts with existing definitions, statements, or other disclosure material set forth herein, is only incorporated to the extent that no conflict arises between that incorporated material and the existing disclosure material. Applicant reserves the right to amend this specification to expressly recite any subject matter, or portion thereof, incorporated by reference herein.

Reference throughout this specification to "various non-limiting embodiments," "certain embodiments," or the like, means that a particular feature or characteristic may be included in an embodiment. Thus, use of the phrase "in various non-limiting embodiments," "in certain embodiments," or the like, in this specification does not necessarily refer to a common embodiment and may refer to different embodiments. Further, the particular features or characteristics may be combined in any suitable manner in one or more embodiments. Thus, the particular features or characteristics illustrated or described in connection with various or certain embodiments may be combined, in whole or in part, with the features or characteristics of one or more other embodiments without limitation. Such modifications and variations are intended to be included within the scope of the present specification.

The grammatical articles "a", "an", and "the", as used herein, are intended to include "at least one" or "one or more", unless otherwise indicated, even if "at least one" or "one or more" is expressly used in certain instances. Thus, these articles are used in this specification to refer to one or more than one (i.e., to "at least one") of the grammatical objects of the article. By way of example, and without limitation, "a component" means one or more components, and thus, possibly, more than one component is contemplated and may be employed or used in an implementation of the described embodiments. Further, the use of a singular noun includes the plural, and the use of a plural noun includes the singular, unless the context of the usage requires otherwise.

In a first embodiment, the invention is directed to a formed plastic part comprising a sacrificial section; and a recyclable section, wherein the sacrificial section and the recyclable section are separated by at least one stress concentrator cut into the formed plastic part, and wherein the at least one stress concentrator is arranged in a pattern

selected from the group consisting of a line, a groove, a triangle, a square, a rectangle, a pentagon, a hexagon, a heptagon, an octagon, a nonagon, a decagon, a rhombus, and a circle.

In a second embodiment, the invention is directed to a process comprising: (a1) separating the sacrificial section from the recyclable section of the formed plastic part of the previous paragraph and discarding the sacrificial section; (a2) removing and discarding the at least one protrusion, if present, (b) mechanically shredding the recyclable section to obtain plastic fragments; (c) at least one of cleaning, sanitizing, and sorting the plastic fragments; (d) optionally, subjecting the plastic fragments to at least one of pyrolysis and chemolysis to obtain a monomer; (e) polymerizing the monomer to produce a recyclate polymer, and (f) optionally, pelletizing the recyclate polymer.

In a third embodiment, the process according to the previous paragraph further includes a step of combining the recyclate polymer with virgin resin.

In selected embodiments the inventive parts are made from thermoplastic compositions comprising (A) an aromatic polycarbonate, (B) a polyether polyol and optionally, (C) at least one additive selected from the group consisting of flame retardants, antidripping agents, impact modifiers, fillers, antistats, coloring agents, pigments, thermal stabilizers different from component B, lubricants, demolding agents, UV absorbers, IR absorbers, hydrolysis stabilizers, and compatibilizers.

In various embodiments, the polycarbonates may comprise a blend of a polycarbonate with another thermoplastic copolymer, such as acrylonitrile-styrene-butadiene (ABS), acrylonitrile-styrene-acrylate (ASA), styrene-acrylonitrile (SAN), polyethylene terephthalate (PET), polybutylene terephthalate (PBT), and others.

## Component (A)

According to the invention, "polycarbonate" is to be understood as meaning both homopolycarbonates and copolycarbonates, in particular, polycarbonates. These polycarbonates may be linear or branched in known fashion. According to the invention, mixtures of polycarbonates may also be used.

A "polycarbonate" or a "polycarbonate material" is a thermoplastic material preferably comprising at least 50 wt.% polycarbonate, more preferably at least 60 wt.% polycarbonate, and even more preferably, at least 65 wt.% polycarbonate.

A portion of up to 80 mol%, preferably of 20 mol% to 50 mol%, of the carbonate groups in the polycarbonates used in accordance with the invention may be replaced by aromatic dicarboxylic ester groups. Polycarbonates of this kind, incorporating both acid radicals from the carbonic acid and acid radicals from aromatic dicarboxylic acids in the molecule chain, are referred to as "aromatic polyestercarbonates." In the context of the present invention, they are encompassed by the umbrella term of the thermoplastic aromatic polycarbonates. The replacement of the carbonate groups by aromatic dicarboxylic acid ester groups takes place essentially stoichiometrically and quantitatively, so that the molar ratio of the reaction partners can also be found in the finished polyestercarbonate. The incorporation of dicarboxylic acid ester groups can be statistical as well as in blocks.

In various embodiments, the thermoplastic polycarbonates, including the thermoplastic aromatic polyestercarbonates, have weight average molecular weights $M_w$, determined by gel permeation chromatography under use of $CH_2Cl_2$ as diluent, of from 10,000 g/mol to 35,000 g/mol, in certain embodiments, from 12,000 g/mol to 32,000 g/mol, in selected embodiments, from 15,000 g/ mol to 32,000 g/mol, and in particular embodiments, from 20,000 g/mol to 31,500 g/mol. The gel permeation chromatography is conducted under the following conditions: calibration with linear polycarbonate (made from bisphenol A and phosgene) of known molecular weight distribution, standards from PSS Polymer Standards Service GmbH, Germany, calibration according to method 2301-0257502-09D (from the year 2009 in German language) from Currenta GmbH & Co. OHG, Leverkusen. Diluent methylene chloride. Column combination from cross-linked styrenedivinylbenzene resin. Diameter of the analytical columns: 7.5 mm, length: 300 mm. Particle size of the column material: 3μm to 20μm. Concentration of the solutions: 0.2 wt.%. Flow rate: 1.0 ml/min, temperature of the solution: 30°C. Detection by means of a refractive index (RI)-detector.

Various details regarding the preparation of polycarbonates are disclosed in many patent documents spanning approximately the last 60 years. Reference may be made here to Schnell, "Chemistry and Physics of Polycarbonates", Polymer Reviews, Volume 9, Interscience Publishers, New York, London, Sydney 1964, to D. Freitag, U. Grigo, P.R. Müller, H. Nouvertné, BAYER AG, "Polycarbonates" in Encyclopedia of Polymer Science and Engineering, Volume 11, Second Edition, 1988, pages 648-718 and finally to U. Grigo, K. Kirchner and P.R. Müller "Polycarbonate" [Polycarbonates] in BeckerBraun, Kunststoff-Handbuch [Plastics Handbook], volume 3/1, Polycarbonate, Polyacetale, Polyester, Celluloseester [Polycarbonates, Polyacetals, Polyesters, Cellulose Esters], Carl Hanser Verlag Munich, Vienna 1992, pages 117-299.

Processes for the production of the polycarbonates which are useful in the present invention, including polyestercarbonates, are the interfacial process and the melt transesterification process (e.g., U.S. Pat. Nos. 5,097,002; 5,340,905; 5,717,057; 6,596,840; 6,740,730; and 7,071,284).

Aromatic polycarbonates are prepared, for example, by reaction of dihydroxyaryl compounds with carbonyl

halides, preferably phosgene, and/or with aromatic dicarbonyl dihalides, preferably benzenedicarbonyl dihalides, by the interfacial process, optionally with use of chain terminators and optionally with use of trifunctional or more than trifunctional branching agents, wherein for the production of polyestercarbonates a part of the carbonic acid derivatives is replaced with aromatic dicarboxylic acids or derivatives of dicarboxylic acids, namely according to the carbonate structure units in the aromatic polycarbonates by dicarboxylic acid ester structure units. Preparation via a melt polymerization process by reaction of dihydroxyaryl compounds with, for example, diphenyl carbonate is likewise possible.

Dihydroxyaryl compounds suitable for the preparation of polycarbonates are those of the formula (1)

HO-Z-OH (1),

wherein,

Z is an aromatic radical of 6 to 30 carbon atoms which may contain one or more aromatic rings, may be substituted and may contain aliphatic, cycloaliphatic radicals, alkylaryl groups, or heteroatoms as bridging elements.

Preferably, Z in formula (1) is a radical of the formula (2),

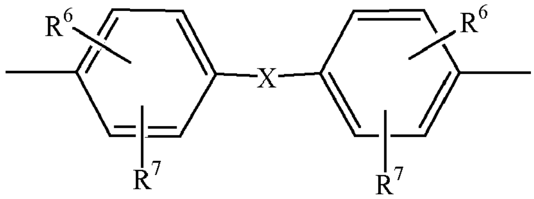

(2),

wherein

$R^6$ and $R^7$ are each independently H, $C_1$-$C_{18}$-alkyl-, $C_1$-$C_{18}$-alkoxy, halogen such as Cl or Br or in each case optionally substituted aryl or aralkyl, in some embodiments H or $C_1$-$C_{12}$-alkyl, in certain embodiments H or $C_1$-$C_8$-alkyl and in selected embodiments H or methyl, and

X is a single bond, -$SO_2$-, -CO-, -O-, -S-, $C_1$-$C_6$-alkylene, $C_2$-$C_5$-alkylidene or $C_5$-$C_6$-cycloalkylidene which may be substituted by $C_1$-$C_6$-alkyl, preferably methyl or ethyl, or else $C_6$-$C_{12}$-arylene which may optionally be fused to further aromatic rings containing heteroatoms.

In various embodiments, X is a single bond, $C_1$-$C_5$-alkylene, $C_2$-$C_5$-alkylidene, $C_5$-$C_6$-cycloalkylidene, -O-, -SO-, -CO-, -S-, -$SO_2$- or a radical of the formula (2a),

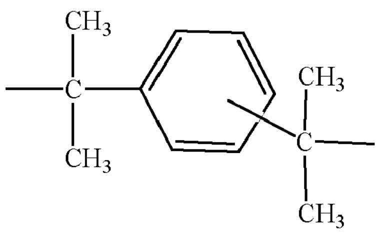

(2a).

Examples of dihydroxyaryl compounds suitable for the preparation of the polycarbonates for use in accordance with the invention include, but are not limited to, hydroquinone, resorcinol, dihydroxydiphenyl, bis(hydroxyphenyl)alkanes, bis(hydroxyphenyl)cycloalkanes, bis(hydroxyphenyl) sulfides, bis(hydroxyphenyl) ethers, bis(hydroxyphenyl) ketones, bis(hydroxyphenyl) sulphones, bis(hydroxyphenyl) sulfoxides, $\alpha,\alpha'$-bis(hydroxyphenyl)diisopropylbenzenes and the alkylated, ring-alkylated and ring-halogenated compounds thereof.

Preferred dihydroxyaryl compounds are 4,4'-dihydroxydiphenyl, 2,2-bis(4-hydroxyphenyl)propane (bisphenol A), 2,4-bis(4-hydroxyphenyl)-2-methylbutane, dimethyl-bisphenol A, 1,1-bis(4-hydroxyphenyl)-p-diisopropylbenzene, 2,2-bis(3-methyl-4-hydroxyphenyl)propane, 2,2-bis(3-methyl-4-hydroxyphenyl)propane, bis(3,5-dimethyl-4-hydroxyphenyl)methane, 2,2-bis(3,5-dimethyl-4-hydroxyphenyl)propane, bis(3,5-dimethyl-4-hydroxyphenyl)sulfone, 2,4-bis(3,5-dimethyl-4-hydroxyphenyl)-2-methylbutane, 1,1-bis(3,5-dimethyl-4-hydroxyphenyl)-p-diisopropylbenzene and 1,1-bis(4-hydroayphenyl)-3,3,5-trimethylcyclohexane, and bisphenols (I) to (III)

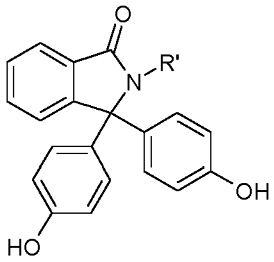
(I)

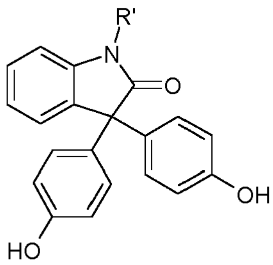
(II)

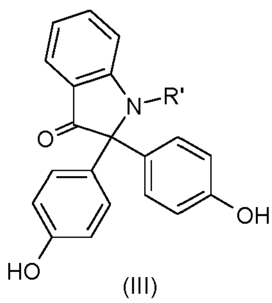
(III)

,

R' in each case is $C_1$-$C_4$-alkyl, aralkyl or aryl, in certain embodiments, methyl or phenyl, in selected embodiments, methyl.

In certain embodiments, the dihydroxyaryl compounds include 2,2-bis-(4-hydroxyphenyl)-propane (bisphenol A), 2,2-bis(3,5-dimethyl-4-hydroxyphenyl)propane, 1,1-bis(4-hydroxyphenyl)cyclohexane and 1,1-bis(4-hydroxyphenyl)-3,3,5-trimethylcyclohexane (bisphenol TMC) and dimethyl-bisphenol A as well as the dihydroxyaryl compounds of formulas (I), (II) and (III).

These and further suitable dihydroxyaryl compounds are described, for example, in U.S. Pat. Nos. 2,991,273; 2,999,835; 2,999,846; 3,148,172; 3,271,367; 4,982,014; DE 2 036 052 A, and DE 3 832 396 A; in French patent application 1 561 518 A1; GB1122003; GB1229482; GB1341318; GB1367790; in the monograph, H. Schnell, Chemistry and Physics of Polycarbonates, Interscience Publishers, New York 1964, p. 28 ff.; p.102 ff., and in D.G. Legrand, J.T. Bendler, Handbook of Polycarbonate Science and Technology, Marcel Dekker New York 2000, p. 72ff.

Only one dihydroxyaryl compound is used in the case of the homopolycarbonates; two or more dihydroxyaryl compounds are used in the case of copolycarbonates. The dihydroxyaryl compounds employed, as well as components of the compositions used in accordance with the invention, similarly to all other chemicals and assistants added to the synthesis, may be contaminated with the contaminants from their own synthesis, handling, and storage. However, it is desirable to employ the purest possible raw materials.

Examples of suitable carbonic acid derivatives include phosgene and diphenyl carbonate.

Suitable chain terminators useful in the production of polycarbonates are monophenols. Suitable monophenols include, for example, phenol itself, alkylphenols such as cresols, p-tert-butylphenol, cumylphenol, and mixtures thereof.

In various embodiments, chain terminators include phenols mono- or polysubstituted by linear or branched $C_1$-$C_{30}$-alkyl radicals, unsubstituted or substituted by tert-butyl. In selected embodiments, the chain terminators are phenol, cumylphenol and p-tert-butylphenol. The amount of chain terminator to be used may be 0.1 to 5 mol%, based on moles of dihydroxyaryl compounds used in each case. The chain terminators can be added before, during or after the reaction with a carbonic acid derivative.

Suitable branching agents include trifunctional or more than trifunctional compounds familiar in polycarbonate chemistry, particularly those having three or more than three phenolic OH groups. Examples of suitable branching agents include, but are not limited to, 1,3,5-tri(4-hydroxyphenyl)benzene, 1,1,1-tri(4-hydroxyphenyl)ethane, tri(4-hydroxyphenyl)phenylmethane, 2,4-bis(4-hydroxyphenylisopropyl)phenol, 2,6-bis(2-hydroxy-5'-methylbenzyl)-4-methylphenol, 2-(4-hydroxyphenyl)-2-(2,4-dihydroxyphenyl)propane, tetra(4-hydroxyphenyl)methane, tetra(4-(4-hydroxyphenylisopropyl)phenoxy)methane and 1,4-bis((4',4"-dihydroxytriphenyl)methyl)benzene and 3,3-bis(3-methyl-4-hydroxyphenyl)-2-oxo-2,3-dihydroindole. The amount of any branching agents to be used may be 0.05 mol% to 2 mol%, based on moles of dihydroxy aryl compounds used in each case. The branching agents can either be initially charged together with the dihydroxyaryl compounds and the chain terminators in the aqueous alkaline phase or added dissolved in an organic solvent before the phosgenation. In the case of the transesterification process, the branching agents are used together with the dihydroxyaryl compounds.

To facilitate incorporation of additives, Component A may be used in the form of powders, pellets, or mixtures thereof.

In various embodiments, the polycarbonate has an MVR of from 4.5 to 34 $cm^3$/(10 min), in certain embodiments of from 5.5 to 12 $cm^3$/(10 min), in selected embodiments of from 6 to 10 $cm^3$/(10 min), determined according to ISO 1133:2012-03 at a test temperature of 300 °C and 1.2 kg load.

A mixture of different polycarbonates may be used as Component A, for example a mixture of the polycarbonates A1 and A2, wherein A2 is a polycarbonate in powdered form. As used herein, the properties for the polycarbonate refer to a respective mixture.

In various embodiments, the compositions contain 50 wt.% to 98.5 wt.%, in some embodiments, 69.85 wt.% to 98.0 wt.%, in certain embodiments 85 wt.% to 97.5 wt.%, in selected embodiments 90.0 wt.% to 97.5 wt.%, and in particular embodiments, 93.0 wt.% to 97.5 wt.% of the aromatic polycarbonate.

**Component (B)**

Component (B) of the polycarbonate comprises one or more stabilizers in the form of a polyether polyol. As those skilled in the art are aware, polyether polyols are the product of the polymerization of epoxides, such as ethylene oxide (EO), propylene oxide (PO), butylene oxide, styrene oxide, and epichlorohydrin, with themselves or by addition of such epoxides, optionally in admixture or sequentially, to starting components with reactive hydrogen atoms, such as water, alcohol, ammonia or amines. Such "starter molecules" usually have a functionality of from 1 to 6. Depending on the process control, such polyether polyols may be homopolymers, block copolymers, random copolymers, capped polymers, or polymers tipped with a mixture of different epoxides.

To specify such polyether polyols, various characteristics have become established in the art:

i) hydroxyl functionality, which depends on the starter molecule starting from which the polyether polyol is synthesized,
ii) hydroxyl or OH number, which is a measure of the content of hydroxyl groups stated in mg of KOH/g, determined according to DIN 53240-3:2016-03,
iii) where epoxides in which the ring opening causes the formation of different, i.e., primary or secondary) hydroxyl groups are used, on the one hand, the proportion of the respective epoxides in the polyether polyol is stated, and on the other hand, the proportion of primary or secondary hydroxyl groups based on the total number of hydroxyl groups present in the polyether polyol is stated, and
iv) the molecular weight ($M_n$ or $M_w$), which is a measure of the length of the polyoxyalkylene chains of the polyether polyols.

In various embodiments, polyether polyols have a number average molecular weight $M_n$ of from 100 to 6200 g/mol, in certain embodiments from 1500 to 4000 g/mol, and in selected embodiments from 1800 to 3000 g/mol, where. $M_n$ is calculated according to the following formula:

$$M_n = 56100*F/OHN,$$

where OH-number (OHN) is determined via hydroxyl end group titration according to DIN 53240-3:2016-03. OHN in mg KOH/g is inserted in the given formula. F is the functionality, which in the context of this invention is related to hydroxyl end groups. Acid end groups, if any, are not taken into account. F is defined as number of hydroxyl end groups, divided by the number of molecules in an ensemble, meaning F is the average number of hydroxyl end groups of a molecule of a compound.

F is normally apparent from the recipe for preparing the polyol but may alternatively be determined by $^1H$ NMR.

In various embodiments, the polyether polyols may be formed from repeating ethylene oxide and propylene oxide units, e.g., with a share of 35 wt.% to 100 wt.% propylene oxide units, in certain embodiments 50 wt.% to 100 wt.% propylene oxide units. The copolymers may be statistical copolymers, gradient copolymers, alternating copolymers or block copolymers formed from ethylene oxide and propylene oxide. In selected embodiments, the polyether polyols are linear polymers.

Useful polyether polyols are those formed from repeating propylene oxide units with a 1,2-diol as starter molecule, more preferably with propylene glycol as the starter molecule. The polyether polyols may be end-capped. In selected embodiments, the polyether polyol is end capped. A preferred agent for end-capping is dihydropyran (3,4-dihydro-2H-pyran).

In certain embodiments, the polyether polyols may be those formed from repeating propylene oxide units with propylene glycol as starter molecule, an OH number within a range of from 50 to 70 mg KOH/g determined according to DIN 53240-3:2016-03, and having a hydroxyl functionality of 2, a proportion of primary hydroxyl groups within a range of from 0 to 3%, based on the total number of primary and secondary hydroxyl groups, having a propylene oxide content of at least 95 wt.% and ethylene oxide content of up to 3 wt.%, in selected embodiments, those without any ethylene oxide units, but only with propylene oxide units.

The polycarbonates useful in the invention may comprise polyether polyols in various embodiments in an amount of from 0.1 to 5 wt.%, in certain embodiments, 0.1 wt.% to 2 wt.%, in selected embodiments, 0.5 wt.% to 1 wt.%, and in particular embodiments, 0.5 wt.% to 1.0 wt.%, wherein wt.% refers to the weight of the polycarbonate.

**Component (C)**

The polycarbonates and polycarbonate blend compositions useful in the invention optionally may comprise additives known to those in the art, including, but not limited to, flame retardants, antidripping agents, impact modifiers, fillers, antistats, coloring agents, pigments, thermal stabilizers different from Component B, lubricants, demolding agents,

UV absorbers, IR absorbers, hydrolysis stabilizers, and compatibilizers. Such additives as typically added in the case of polycarbonates are described, e.g., in U.S. Pat. Nos. 5,288,778; 5,821,380; and 5,883,165 and in "Plastics Additives Handbook", Hans Zweifel, 5th Edition 2000, Hanser Verlag, Munich.

The amount of such additives in various embodiments is up to 30 wt.%, in some embodiments up to 10 wt.%, in certain embodiments up to 6 wt.%, in selected embodiments 0.01 to 3 wt.%, and in particular embodiments 1 wt.%, with all values referring to the composition and all including the upper value.

Useful demolding agents include, but are not limited to, pentaerythrityl tetrastearate (PETS), glycerine monostearate (GMS), their carbonates, and mixtures of any of these.

Optionally, the composition may include a UV absorber. Various UV absorbers are those having as low a transmission as possible below 400 nm and as high a transmission as possible above 400 nm. Such UV absorbers are known in the art and described, e.g., in U.S. Pat. Nos. 5,288,778; 5,821,380; and 5,883,165. Ultraviolet absorbers particularly suitable for use in the composition according to the invention are selected from benzotriazoles, triazines, benzophenones, and arylated cyanoacrylates.

Particularly suitable ultraviolet absorbers are hydroxybenzotriazoles, such as 2-(3',5'-bis(1,1-dimethylbenzyl)-2'-hydroxyphenyl)benzotriazole (TINUVIN 234, BASF), 2-(2'-hydroxy-5'-(tert-octyl)phenyl)benzotriazole (TINUVIN 329, BASF), bis(3-(2H-benzotriazolyl)-2-hydroxy-5-tert-octyl)methane (TINUVIN 360, BASF), 2-(4,6-diphenyl-1,3,5-triazin-2-yl)-5-(hexyloxy)phenol (TINUVIN 1577, BASF), and also benzophenones such as 2,4-dihydroxybenzophenone (CHIMASSORB 22, BASF) and 2-hydroxy-4-(octyloxy)benzophenone (CHIMASSORB 81, BASF), 2,2-bis[[(2-cyano-1-oxo-3,3-diphenyl-2-propenyl)oay]methyl]-1,3-propanediyl ester (9CI) (UVINUL 3030, BASF AG), 2-[2-hydroxy-4-(2-ethylhexyl)oxy]phenyl-4,6-di(4-phenyl)phenyl-1,3,5-triazine (TINUVIN 1600, BASF,), tetraethyl-2,2'-(1,4-phenylenedimethylidene) bismalonate (HOSTAVIN B-Cap, Clariant) or N-(2-ethoxyphenyl)-N'-(2-ethylphenyl)ethanediamide (TINUVIN 312, CAS No. 23949-66-8, BASF). Particularly preferred specific UV absorbers are TINUVIN 360, TINUVIN 329 and/or TINUVIN 312, very particular preference being given to TINUVIN 329 and TINUVIN 312. It is also possible to employ mixtures of these ultraviolet absorbers.

Suitable IR absorbers are described, in a variety of patents including U.S. Pat. Nos. 7,074,351; 7,169,834; 8,153,239; and in U.S. Pat. Pub. 2005/0165148. Of those mentioned in the literature, boride- and/or tungstate-based IR absorbers, in particular, cesium tungstate or zinc-doped cesium tungstate, as well as ITO- or ATO-based IR absorbers and combinations thereof are particularly useful.

Suitable impact modifiers are core-shell type impact modifiers, including, but not limited to, acrylonitrile butadiene styrene (ABS), copolymer of methyl methacrylate, acrylonitrile, butadiene and styrene (MBS), acryl-based, silicone-acryl-based impact modifiers, and non-core-shell type impact modifiers.

The polycarbonates and polycarbonate blends useful according to the invention may comprise organic and inorganic fillers in the usual amounts. Suitable fillers include, but are not limited to, glass fibers and carbon fibers, cellulosics, graphite, graphene, and carbon nanotubes, chalk, quartz powder, titanium dioxide, silicates, aluminosilicates, e.g., talc, wollastonite, montmorillonite, also modified by ion exchange, kaolin, zeolite, vermiculite, aluminum oxide, and silica. Mixtures of these or these and other fillers may also be used.

Polytetrafluoroethylene (PTFE) is a preferred antidripping agent, although other antidripping agents may be used.

Sulfur-containing stabilizers may be used including, but not limited to, 3,3'-thiodipropionic, distearyl disulfide (HOSTANOX SE 10, Clariant), pentaerythrityl tetrakis(3-laurylthiopropionate) (SOGNOX 4120, Songwon International AG) and bis-(phenylsulfonyl)methane.

The polymer compositions useful in the invention, comprising Components A, B, and optionally C, are produced by standard incorporation processes via combination, mixing and homogenization of the individual constituents, especially with the homogenization taking place in the melt under the action of shear forces. If appropriate, combination and mixing prior to the melt homogenization occurs using powder premixes. For all components used, it is desirable to employ the purest possible compounds.

Various embodiments may use premixes of granules or granules and powders with components B and optionally C. Other embodiments may use premixes which have been produced from solutions of the mixture components in suitable solvents, in which case homogenization is optionally effected in solution and the solvent is removed. It is also possible to introduce components B and optionally C into the polycarbonate by known methods or as a masterbatch. Masterbatches may be used in selected embodiments for incorporation of Component C.

In this context, the composition useful in the invention may be combined, mixed, homogenized and subsequently extruded in customary apparatus such as screw extruders (TSE twin-screw extruders for example), kneaders or BRABENDER or BANBURY mills. In these embodiments, the extrudate may be cooled and comminuted after extrusion. It is also possible to premix individual components and to add the remaining starting materials individually and/or likewise in a mixture.

It is possible in various embodiments to combine and mix a premix in the melt in the plastifying unit of an injection-molding machine. In these embodiments, the melt is converted directly to a shaped body in the subsequent step.

The manufacture of the molded parts from the compositions according to the invention in various embodiments may be accomplished by injection-molding, extrusion, or rapid-heat cycle molding.

In various embodiments, the polycarbonate comprises a blend of a polycarbonate with a thermoplastic copolymer chosen from among acrylonitrile-styrene-butadiene (ABS), acrylonitrile-styrene-acrylate (ASA), styrene-acrylonitrile (SAN), polyethylene terephthalate (PET), polybutylene terephthalate (PBT), and others.

**Polycarbonate/acrylonitrile-butadiene-styrene (ABS) copolymer blends**

A rubber-modified vinyl (co) polymer is included in polycarbonate/ABS blends,

B.1) 80 wt.% to 95 wt.%, preferably 83 wt.% to 93 wt.%, more preferably 85 wt.% to 92 wt.%, based on the rubber-modified vinyl (co) polymer B, structural units derived from at least one vinyl monomer and
B.2) 5 wt.% to 20 wt.%, preferably 7 wt.% to 17 wt.%, more preferably 8 wt.% to 15 wt.%, based on the rubber-modified vinyl (co) polymer B, one or more rubber-elastic graft bases having glass transition temperatures Tg< -50°C, preferably from < -60°C, particularly preferably < -70°C containing at least 50 wt .%, preferably at least 70 wt.%, particularly preferably 100 wt.%, based on B.2, derived from 1,3-butadiene structural units,
wherein the rubber-modified vinyl (co) polymer B is

(i) a disperse phase consisting of

(i.1) with vinyl (co) polymer of structural units according to B.1 grafted rubber particles and
(i.2) vinyl (co)polymer enclosed in the rubber particles as a separated disperse phase also from structural units according to B.1

and
(ii) a rubber-free vinyl (co)polymer matrix not bound to the rubber particles and not enclosed in these rubber particles consisting of structural units according to B.1,

and wherein the disperse phase according to (I) has an average diameter D50 measured by ultracentrifugation of 0.7 to 2.0 pm, preferably from 0.7 to 1.5 pm, in particular from 0.7 to 1.2 pm.

The glass transition temperature Tg is determined, unless expressly described otherwise in the present invention, for all components by means of differential scanning calorimetry (DSC) according to DIN EN 61006 (version of 1994) at a heating rate of 10 K / min with determination of the Tg as the center temperature (tangent method).

The rubber-modified vinyl (co) polymers according to Component B have a melt flow rate (MVR), measured according to ISO 1133 (version of 2012) at 220 ° C with a stamp load of 10 kg, of preferably 2 to 20 ml/10min, more preferably 3 to 15 ml/10min, in particular 4 to 8 ml/10min. If mixtures of several rubber-modified vinyl (co)polymers are used as Component B, the preferred MVR ranges are the mean value of the MVR of the individual components weighted over the mass fractions of the components in the mixture.

Such rubber-modified vinyl (co) polymers B are prepared, for example, by radical polymerization, preferably in the mass polymerization process, of

B.1 80 to 95 wt.%, preferably 83 to 93 wt.%, particularly preferably 85 to 92 wt.%, based on the rubber-modified vinyl (co) polymer B, at least one vinyl monomer in the presence of
B.2 5 to 20 wt.%, preferably 7 to 17 wt.%, particularly preferably 8 to 15 wt.%, based on the rubber-modified vinyl (co) polymer B, one or more rubber-elastic graft bases with glass transition temperatures < -50°C, preferably < -60°C, particularly preferably < -70°C, containing at least 50 wt.%, preferably at least 70 wt.%, particularly preferably 100 wt.% based on B.2, of structural units derived from 1,3-butadiene.

In the mass polymerization process used for the preparation of the rubber-modified vinyl (co) polymer B, both the polymerization of the vinyl monomers according to B.1 and a grafting of the resulting vinyl (co) polymer onto the rubber-elastic graft base according to B.2. Furthermore, in this reaction formation by self-organization (phase separation) the formation of a disperse phase (i) consisting of

(1.1) rubber particles grafted with vinyl(co)polymer from structural units according to B.1 and
(1.2) vinyl (co)polymer enclosed in the rubber particles as a separate disperse phase also from structural units according to B.1,

wherein this rubber-containing phase (i) is dispersed in a rubber-free vinyl (co) polymer matrix (ii) consisting of structural units according to B.1 not bound to the rubber particles and not enclosed in these rubber particles.

The rubber-free vinyl (co) polymer (ii) can be dissolved in contrast to the other vinyl (co) polymer proportions in Component B by suitable solvents such as acetone.

The size of the disperse phase (i) in the rubber-modified vinyl (co) polymers B thus prepared is adjusted via the conditions of reaction formation such as temperature and resulting viscosity of the polymer and shear by, for example, stirring.

The average particle size $D_{50}$ is the diameter above and below which 50 wt.% of the particles lie. It is, unless expressly described otherwise in the present invention, for all components by means of ultracentrifuge measurement (W. Scholtan, H. Lange, Colloid and Polymer Science, 250 (1972), 782-796).

The monomers B.1 are preferably mixtures consisting of

B.1.1 60 to 85 wt. preferably, 65 to 80 wt., more preferably, 70 to 78 wt., parts, each based on the sum of B.1.1 and B.1.2, styrene and

B.1.2 15 to 40 wt. - preferably 20 to 35 wt., more preferably 22 to 30 wt.-Parts, each based on the sum of B.1.1 and B.1.2, acrylonitrile, and optionally.

B.1.3 0-10 wt., preferably 0-7 wt., more preferably 0-5 wt.-Parts methyl methacrylate or n-butyl acrylate, each based on 100 wt.-Parts as the sum of B.1.1 and B.1.2.

Preferred graft bases B.2 are diene rubbers containing butadiene, or mixtures of diene rubbers containing butadiene or copolymers of diene rubbers containing butadiene or mixtures thereof with other copolymerizable monomers (e.g., according to B.1.1 and B.1.2). Particularly preferred graft bases B.2 are produced by anionic polymerization using a lithium compound as polymerization catalyst. Particularly preferred as graft base B.2 is pure polybutadiene rubber. In a further preferred embodiment, B.2 is styrene-butadiene-block copolymer rubber.

The Component B preferably has a polybutadiene content of 5 to 18 wt.%, more preferably from 7 to 15 wt.%, in particular from 8 to 13 wt.%.

Particularly preferred rubber-modified vinyl (co) polymers according to component B are mass ABS polymers such as those described for example in U.S. Pat. No. 3,644,574 (=DE-OS 2,035,390) or in DE-OS 2,248,242 (= GB-PS 1,409,275) or in Ullmann's Encyclopedia of Chemical Technology, Vol. 19 (1980), p. 280 ff. are described.

The not chemically bound to the rubber base (s) B.2 and not enclosed in the rubber particles vinyl (co) polymer (ii) can be formed as shown above due to the production during the polymerization of graft polymers B. It is also possible that a part of this not chemically bound to the rubber base (s) B.2 and not included in the rubber particles vinyl (co) polymer (ii) in the rubber-modified vinyl (co) polymer according to Component B is formed due to production during its production in the mass polymerization process and another part is polymerized separately and added to Component B as part of Component B. The proportion of vinyl (co) polymer (ii), regardless of its origin, measured as an acetone-soluble portion, is in Component B, based on Component B, preferably at least 50 wt.%, particularly preferably at least 60 wt.%, more preferably at least 70 wt.%.

This vinyl (co) polymer (ii) has in the rubber-modified vinyl (co) polymers according to Component B a weight-averaged molecular weight $M_w$ from 70 to 250 kg / mol, preferably from 130 to 200 kg / mol, in particular from 150 to 180 kg / mol.

The weight-averaged molecular weight $M_w$ of vinyl (co) polymer (ii) in Component B is measured in the present invention by gel permeation chromatography (GPC) in tetrahydrofuran against a polystyrene standard.

Component B is preferably free of emulsifiers that are typically used in emulsion polymerization processes such as for example saturated fatty acids having 8 to 22 carbon atoms, resin acids, alkyl and alkylarylsulfonic acids, and fatty alcohol sulfates.

The Component B preferably contains less than 100 ppm, more preferably less than 50 ppm, most preferably less than 20 ppm ions of alkali metals and alkaline earth metals. The Component B preferably contains an amount greater than zero but less than 10 ppm, more preferably 0.01-5 ppm, most preferably 0.1-2 ppm of lithium.

Suitable as Component B rubber-modified vinyl (co) polymers are, for example, MAGNUM 3404, MAGNUM 3504 and MAGNUM 3904 from Trinseo S.A. (Luxembourg).

<u>**Polycarbonate/styrene-acrylonitrile copolymer (SAN) blends**</u>

In polycarbonate/ASA polymer blends, an acrylonitrile-styrene-acrylate copolymer (ASA), is included which comprises a styrene-acrylonitrile (SAN) matrix having an acrylate elastomer phase dispersed within the SAN. The ASA terpolymer can be a homogeneous blend of polymers and/or an interpolymer, i.e., a polymer composition having a plurality of phases, wherein the polymer phases have graft linkages and/or interpenetration of polymer chains of a first phase into a second phase. The interpenetrating chains can form a network within the phase into which they penetrate. Acrylonitrile-styrene-acrylate copolymers also desirably have an outer continuous phase of acrylonitrile-styrene copolymer, which is suitable for good blending properties with polycarbonate.

Acrylonitrile-styrene-acrylate copolymers can comprise a phase comprising a crosslinked acrylate elastomer, a phase comprising a crosslinked styrene-acrylonitrile copolymer, and a phase comprising a linear styrene acrylonitrile copolymer. As used in the context of the present invention, "styrene" can include methyl substituted styrene such as, $\alpha$-methylstyrene, vinyl toluene, and combinations thereof.

Specific acrylonitrile-styrene-acrylate copolymers include core-shell-type impact modifiers in a styrene-acrylonitrile (SAN) matrix. The acrylate elastomer core portion of these resins may be composed of alkyl, aryl, or aryl-alkyl (also referred to as aralkyl) esters of acrylic or methacrylic acids. Specifically, acrylates include esterified products of $C_1$ - $C_{30}$-substituted alkyl, $C_3$-$C_{30}$ - substituted cycloalkyl, $C_6$-$C_{30}$-substituted aryl, and $C_7$-$C_{30}$-substituted aralkyl alcohols.

Suitable acrylate monomers include, but are not limited to, methyl acrylate, ethyl acrylate, 1-propyl acrylate, 2-propyl acrylate, n-butyl acrylate, 2-butyl acrylate, 2-methylpropyl acrylate, t-butyl acrylate, n-pentyl acrylate, 2-pentyl acrylate, 3-pentyl acrylate, 2,2-dimethylpropyl acrylate, n-hexyl acrylate, cyclohexyl methacrylate, methyl cyclohexyl acrylate, heptyl acrylates, octyl acrylates, decyl acrylates, phenyl acrylate, benzyl acrylate, hydroxyethyl acrylate, 2-hydroxypropyl acrylate, and combinations thereof.

Methacrylate monomers may also be used, including but not limited to, methyl methacrylate, ethyl methacrylate, 1-propyl methacrylate, 2-propyl methacrylate, n-butyl methacrylate, 2-butyl methacrylate, 2-methylpropyl methacrylate, t-butyl methacrylate, n-pentyl methacrylate, 2-pentyl methacrylate, 3-pentyl methacrylate, 2,2-dimethylpropyl methacrylate, n-hexyl methacrylate, cyclohexyl methacrylate, methyl cyclohexyl methacrylate, heptyl methacrylates, octyl methacrylates, decyl methacrylates, phenyl methacrylate, benzyl methacrylate, hydroxyethyl methacrylate, 2-hydroxypropyl methacrylate.

Specific nitrile monomers include acrylonitrile, methacrylonitrile, fumaronitrile, a combination comprising one or more of these. Suitable vinyl aromatic monomers include, but are not limited to, styrene, $\alpha$-methyl styrene, vinyl toluene, chloromethyl styrene, chlorostyrene, bromostyrene, acetoxystyrene, methoxystyrene, and combinations thereof.

Such acrylonitrile-styrene-acrylate polymers can be prepared by solution phase polymerization, emulsion polymerization suspension polymerization, a combination comprising at least one of these methods. The core shell portion of the resin may be prepared by a process wherein the acrylate elastomer core is polymerized, and a thermoplastic shell is grafted to the core. Specific examples of a thermoplastic shell include polymethyl methacrylate, polystyrene, styrene-acrylonitrile copolymer, and other similar vinyl polymers or copolymers. The acrylate or methacrylate elastomer core may be crosslinked with polyfunctional vinyl compounds including, but not limited to, divinyl benzene, 1,5-hexadiene, 1,7-octadiene, diethyleneglycol diacrylate, propylene glycol diacrylate, propylene glycol dimethacrylate.

Acrylonitrile-styrene-acrylate (ASA) copolymers suitable for use as Component B are known in the literature and are available from a variety of suppliers, such as Formosa Chemicals (GELOV), Chi Mei Corporation (KIBILAC), and Sabic (LURAN).

The compositions of the present invention may contain 20 wt.% to 40 wt.%, preferably 25 wt.% to 35 wt.% of acrylonitrile-styrene-acrylate (ASA) copolymer, based on the weight of the composition. The acrylonitrile-styrene-acrylate (ASA) copolymer may be present in the composition of the present invention in an amount ranging between any combination of these values, inclusive of the recited values.

In the present invention, styrene-acrylonitrile copolymer is referred to as SAN resin. The proportion of acrylonitrile is 5% to 50% by weight, preferably 15% to 35% by weight, the proportion of styrene is 95% to 50% by weight, preferably 85% to 65% by weight, based on 100% by weight of the overall styrene-acrylonitrile copolymer.

The styrene-acrylonitrile copolymer can be prepared by any processes such as bulk polymerization, solution polymerization, suspension polymerization and emulsion polymerization, preferably bulk polymerization or suspension polymerization. Further, copolymerization process can be one-step copolymerization or multi-step copolymerization. The styrene-acrylonitrile copolymer useful in the present invention has a weight average molecular weight of 40,000-200,000 g/mol, preferably 50,000-160,000 g/mol, more preferably 70,000-150,000 g/mol, measured by gel permeation chromatography (GPC).

Styrene-acrylonitrile (SAN) copolymers suitable for use in the polycarbonate blends are known in the literature or can be prepared by methods in the literature and are commercially available from a variety of suppliers, such as INEOS (LUSTRAN).

The polycarbonate blends of the present invention may contain 0 wt.% to 35 wt.%, preferably >0 wt.% to 32 wt.% of styrene-acrylonitrile copolymer, based on the weight of the composition. The styrene-acrylonitrile copolymer may be present in the polycarbonate blends of the present invention in an amount ranging between any combination of these values, inclusive of the recited values.

## Polycarbonate/polyethylene terephthalate (PET) copolymer blends

In polycarbonate/PET polymer blends, polyethylene terephthalate (also referred to as "PET") is included which is

a polyester of terephthalic acid and ethylene glycol which can be obtained by the polycondensation of dimethyl terephthalate with ethylene glycol, and also terephthalic acid with ethylene glycol or ethylene oxide. Polyethylene terephthalate exists both as an amorphous (transparent) and as a semi-crystalline (opaque and white) thermoplastic material. It has chemical resistance to mineral oils, solvents, and acids but not to bases. Semi-crystalline polyethylene terephthalate has good strength, ductility, stiffness, and hardness. Amorphous polyethylene terephthalate has better ductility but less stiffness and hardness.

The polycarbonate blends of the present invention may contain 0 wt.% to 35 wt.%, preferably >0 wt.% to 32 wt.% of polyethylene terephthalate copolymer, based on the weight of the composition. The polyethylene terephthalate copolymer may be present in the polycarbonate blends of the present invention in an amount ranging between any combination of these values, inclusive of the recited values.

## Polycarbonate/polybutylene terephthalate (PBT) copolymer blends

In polycarbonate/polybutylene terephthalate copolymer blends, PBT is included which can be produced by the process taught in U.S. Pat. No. 2,465,319 to Winfield et al. It is prepared by heating together terephthalic acid and an excess of tetramethylene glycol at a temperature between 220°C and 240°C and thereafter heating the reaction mixture in the absence of air and presence of nitrogen or other inert gas for some hours until a desired intrinsic viscosity is reached. The resin can then be heated under vacuum to remove by-products. For the purposes of the present invention the polybutylene terephthalic polyester should have an internal viscosity of at least about 0.95 and preferably between 1.20 and 1.30. As is well known, intrinsic viscosity is determined as an indication of the more difficultly measurable molecular weight of condensation polymers and is defined as:

Limit $\frac{\eta sp}{C}$ as $C$ approaches zero

where nsp is the viscosity of a dilute orthochlorophenol solution of the polyester divided by the viscosity of the orthochlorophenol solvent *per se* measured in the same units at the same temperature, and C is the concentration in grams of the polyester per 100 cc of solution, as is set forth in, col. 3 of U.S. Pat. No. 2,597,643.

The resins of the present invention may be prepared by mechanically mixing the polybutylene terephthalate with about 10 to 20 wt.% of the polycarbonate based on the total weight of the resin and then extruding the mixture. Other additives may also be included in the mixture or master batched into one of the components. If additives are to be master batched, they are preferably master batched into the polycarbonate.

## Glass-filled polycarbonates

Fiber glass may be included as a filler, or a reinforcing agent, in polycarbonates and polycarbonate blends to improve stiffness (modulus) and dimensional stability (coefficient of thermal expansion). Preferably, glass fiber loadings in polycarbonates and polycarbonate blends range from 5% to 50%. As the fiber glass content increases, the polycarbonate exhibits a decrease in melt flow characteristics and an increase in melt viscosity. As a result, it is difficult to generate thin-wall injection molded parts (thickness<1.0 mm) with these kinds of polycarbonate materials. In addition, increasing fiber glass content results in increased surface roughness and lower surface gloss in injection molded parts due to glass fibers breaking through the resin surface.

## Mineral filled polycarbonates

Minerals such as calcium carbonate, talc, silica, wollastonite, clay, calcium sulfate fibers, mica, glass beads, and alumina trihydrate may be included in polycarbonates and polycarbonate blends as is known in the art.

The composition useful in the invention may be combined, mixed, homogenized and then extruded in customary apparatus such as screw extruders (TSE twin-screw extruders for example), kneaders or BRABENDER or BANBURY mills. In these embodiments, the extrudate may be cooled and comminuted after extrusion. It is also possible to premix individual components and to add the remaining starting materials individually and/or likewise in a mixture.

It is possible in various embodiments to combine and mix a premix in the melt in the plastifying unit of an injection-molding machine. In these embodiments, the melt is converted directly to a shaped body in the next step.

The manufacture of the molded parts from the compositions according to the invention in various embodiments may be accomplished by injection-molding, extrusion, or rapid-heat cycle molding.

As those skilled in the art are aware, a variety of processes exist for recycling the formed plastic part made from materials such as polycarbonates. These processes may involve: (a1) separating the sacrificial section from the recyclable section of the formed plastic part and discarding the sacrificial section; (a2) removing and discarding the at least one protrusion, if present, (b) mechanically shredding the recyclable section to obtain plastic fragments; (c) at least one of cleaning, sanitizing, and sorting the plastic fragments; (d) optionally, subjecting the plastic fragments to at least one

of pyrolysis and chemolysis to obtain a monomer; (e) polymerizing the monomer to produce a recyclate polymer, and (f) optionally, pelletizing the recyclate polymer. The process of the invention may also include a step of combining a portion of the resultant recyclate polymer with a portion of virgin resin to provide a more sustainable resin having virgin content and recyclate content. These resins may find use in the electrical, electronic, and household appliance (EE&A) industries.

## EXAMPLES

The non-limiting and non-exhaustive examples that follow are intended to further describe various non-limiting and non-exhaustive embodiments without restricting the scope of the embodiments described in this specification. All quantities given in "parts" and "percents" are understood to be by weight, unless otherwise indicated.

The following materials were used in preparation of the Examples:

PC-A a general-purpose polycarbonate with MVR (300 °C/1.2 kg) 12 $cm^3$/10 min; medium viscosity; UV stabilized; commercially available from Covestro as Makrolon 2607;

PC-B a rubber modified (polycarbonate +styrene-acrylonitrile) blend; 10% glass fiber reinforced; Vicat/B 120 temperature = 134 °C; tensile modulus = 4800 MPa; commercially available from Covestro as BAYBLEND T88GF10; and

PC-C a moderate thermal conductivity polycarbonate; MVR (300 °C/1.2 kg) 9.0 $cm^3$/10 min; medium viscosity; commercially available from Covestro as MAKROLON TC110.

A custom jig with steel plates was designed to hold a 4 in. (10.2 cm) x 6 in. (15.2 cm) part and ease the removal of the bosses from the part. As used herein, a "boss", is typically a cylindrical projection with an opening for attachment hardware and acts as an attachment point in many designs. The openings and sizes of the plate specifically aligned with the concentrators. With the variations molded in three resins, the inventors set out to determine the best method to remove the inserts. The examined removal methods were (1) a shear strike from the top of the projection and (2) a shear strike from bottom of the projection, (3) a hammer strike with solid punch from the top of the projection, and (4) a hammer strike from the bottom of the projection with a solid punch. These methods were compared to drilling out the projection which bypasses the need for a concentrator entirely but can only be done easily from the rear side. The hammer was made of steel and had a 22.5mm diameter. A downward velocity of approximately 6 m/s was used. The punch was also made of steel and had a 15mm diameter. Except where noted, the hammer strikes occurred at ambient temperature (23°C).

FIG. 1 is a photograph of a 4 in. (10.2 cm) x 6 in. (15.2 cm) formed plastic (polycarbonate) part **10** with bosses that was used in the Examples. Standard bosses **12a, 12b, 12c** are shown at the uppermost portion of the photo. Six-opening stress concentrators **14a, 14b,** and **14c** surround standard bosses **15a, 15b,** and **15c** in the middle of the formed plastic part. Stress concentrators introduce a weakness to the formed plastic part to allow for easier removal of the boss or a sacrificial section. Also show in FIG. 1 are backside openings **16a, 16b,** and **16c.** The height of the bosses designated with a "c" was small (3.1mm), those with a "b" were large (4.9mm), and those with an "a" were medium (4.0mm).

FIG. 2A illustrates drilling the rear side of the formed plastic part shown in FIG. 1. FIG. 2B depicts a hammer strike with a solid punch to the top of the formed plastic part shown in FIG. 1. FIG. 2C shows a hammer strike with a solid punch to the rear of the formed plastic part shown in FIG. 1. FIG. 2D illustrates a hammer strike with a shear blade to the top of the formed plastic part shown in FIG. 1. FIG. 2E is a photograph of the shear blade used in the instant Examples.

FIG. 3A is a photograph depicting the results after drilling the rear side of the formed plastic part shown in FIG. 1, at room temperature, where the part was made of PC-A. FIG. 3B shows the results after drilling the rear side of the formed plastic part shown in FIG. 1, at room temperature, where the part was made of PC-B. FIG. 3C illustrates the results after drilling the rear side of the formed plastic part shown in FIG. 1, at room temperature, where the part was made of PC-C. As can be appreciated by reference to FIGS. 3A, 3B, and 3C, all three polycarbonate materials were very receptive to drilling, and there was limited material loss.

FIG. 4A is a photograph depicting the results after a hammer strike with a solid punch to the top of the formed plastic part shown in FIG. 1, at room temperature, where the part was made of PC-A. FIG. 4B shows the results after a hammer strike with a solid punch to the top of the formed plastic part shown in FIG. 1, at room temperature, where the part was made of PC-B. FIG. 4C illustrates the results after a hammer strike with a solid punch to the top of the formed plastic part shown in FIG. 1, at room temperature, where the part was made of PC-C. As can be appreciated by reference to FIGS. 4A, 4B, and 4C, all the bosses made of PC-A were deformed and compressed instead of breaking. Deformation made removal of the bosses difficult. The bosses made of PC-B were almost completely fractured, regardless of the size of the stress concentrator. The bosses of PC-C showed better resilience in the standard boss and pass-through opening, but the largest bosses were the weakest of all.

FIG. 5A is a photograph showing the results after a hammer strike with a solid punch to the rear of the formed

plastic part shown in FIG. 1, at room temperature, where the part was made of PC-A. FIG. 5B shows the results after a hammer strike with a solid punch to the rear of the formed plastic part shown in FIG. 1, at room temperature, where the part was made of PC-B. FIG. 5C illustrates the results after a hammer strike with a solid punch to the rear of the formed plastic part shown in FIG. 1, at room temperature, where the part was made of PC-C. As can be appreciated by reference to FIGS. 5A, 5B, and 5C, the bosses made of PC-A deflected and tilted but did not fracture. The bosses made of PC-B fully fractured, regardless of the type of stress concentrator. The bosses made of PC-C totally fractured. Rear side punches were a significantly better removal method compared to top side.

FIG. 6A is a photograph depicting the results after a hammer strike with a shear blade to the top of the formed plastic part shown in FIG. 1, at room temperature, where the part was made of PC-A. FIG. 6B shows the results after a hammer strike with a shear blade to the top of the formed plastic part shown in FIG. 1, at room temperature, where the part was made of PC-B. FIG. 6C illustrates the results after a hammer strike with a shear blade to the top of the formed plastic part shown in FIG. 1, at room temperature, where the part was made of PC-C. As can be appreciated by reference to FIGS. 6A, 6B, and 6C, no fractures were observed in any of the polycarbonate materials tested, whether from the top or bottom side. Although the first set of shears broke and were replaced with a stronger set, there were no fractures observed.

FIG. 7A depicts the results after a hammer strike, at -30°C with a solid punch to the rear of the formed plastic part shown in FIG. 1, where the part was made of PC-A. FIG. 7B illustrates the results after a hammer strike at -30°C, with a solid punch to the rear of the formed plastic part shown in FIG. 1, where the part was made of PC-B. FIG. 7C shows the results after a hammer strike, at -30°C, with a solid punch to the rear of the formed plastic part shown in FIG. 1, where the part was made of PC-C. As can be appreciated by reference to FIGS. 7A, 7B, and 7C, the bosses made of PC-A fractured in only the largest bosses. The material was still very resilient. The bosses made of PC-B and PC-C completely fractured.

Recycling of plastic parts according to the invention may also be enhanced by locating all non-recyclable components such as electronic pieces, circuit boards, metal buses, etc., into a sacrificial section of the plastic part which is separated from the remainder of the part by stress concentrators, so that during recycling, the sacrificial section may be broken off and disposed of. FIG. 8 illustrates this with a sacrificial section separated by a linear stress concentrator **84** being broken to separate a recyclable portion **82** of a formed plastic part from a non-recyclable portion **86.**

A comparison of the various removal methods is provided in the table below:

| | Drilling | Hammer + punch at top of formed plastic part | Hammer + punch, at rear of formed plastic part |
|---|---|---|---|
| Ability to automate | +++ | ++ | ++ |
| Ease of alignment | + | ++ | +++ |
| Retained mass | +++ | +++ | +++ |
| Energy usage | +++ | ++ | ++ |
| Rate of success | +++ | + | ++ |

This specification has been written with reference to various non-limiting and non-exhaustive embodiments. However, it will be recognized by persons having ordinary skill in the art that various substitutions, modifications, or combinations of any of the disclosed embodiments (or portions thereof) may be made within the scope of this specification. Thus, it is contemplated and understood that this specification supports additional embodiments not expressly set forth herein. Such embodiments may be obtained, for example, by combining, modifying, or reorganizing any of the disclosed steps, components, elements, features, aspects, characteristics, limitations, and the like, of the various non-limiting embodiments described in this specification. In this manner, Applicant reserves the right to amend the claims during prosecution to add features as variously described in this specification, and such amendments comply with the requirements of 35 U.S.C. §112(a), and 35 U.S.C. §132(a).

Various aspects of the subject matter described herein are set out in the following paragraphs:

In a first aspect, the invention is directed to a formed plastic part comprising: a sacrificial section; and a recyclable section, wherein the sacrificial section and the recyclable section are separated by at least one stress concentrator partially extending into the formed plastic part, and wherein the at least one stress concentrator is arranged in a pattern selected from the group consisting of a line, a groove, a triangle, a square, a rectangle, a pentagon, a hexagon, a heptagon, an octagon, a nonagon, a decagon, a rhombus, and a circle.

In a second aspect, the invention is directed to the formed plastic part according to the previous paragraph, wherein the at least one stress concentrator extends completely through the formed plastic part.

In a third aspect, the invention is directed to the formed plastic part according to one of the previous two paragraphs, wherein the sacrificial section further comprises one selected from the group consisting of electronic components, circuit boards, glues, paints, coatings, metal buses, and combinations thereof.

In a fourth aspect, the invention is directed to the formed plastic part according to any one of the previous three paragraphs, wherein the sacrificial section comprises at least one protrusion having a top side and a rear side.

In a fifth aspect, the invention is directed to the formed plastic part according to any one of the previous four paragraphs, wherein the at least one protrusion comprises a metal-threaded insert.

In sixth aspect, the invention is directed to the formed plastic part according to any one of the previous five paragraphs, wherein the plastic comprises a thermoplastic.

In a seventh aspect, the invention is directed to the formed plastic part according to the previous paragraph, wherein the thermoplastic comprises a polycarbonate.

In an eighth aspect, the invention is directed to the formed plastic part according to the previous paragraph, wherein the polycarbonate comprises a homopolycarbonate.

In a ninth aspect, the invention is directed to the formed plastic part according to one of the previous two paragraphs, wherein the polycarbonate comprises a thermally conductive polycarbonate.

In a tenth aspect, the invention is directed to the formed plastic part according to any one of the previous three paragraphs, wherein the polycarbonate comprises a blend with one selected from the group consisting of acrylonitrile-styrene-butadiene (ABS), acrylonitrile-styrene-acrylate (ASA), styrene-acrylonitrile (SAN), polyethylene terephthalate (PET), polybutylene terephthalate (PBT).

In an eleventh aspect, the invention is directed to the formed plastic part according to any one of the previous four paragraphs, wherein the thermoplastic contains a filler selected from the group consisting of glass fibers, carbon fibers, cellulosics, graphite, graphene, carbon nanotubes, chalk, quartz powder, titanium dioxide, silicates, talc, wollastonite, montmorillonite, kaolin, zeolite, vermiculite, aluminium oxide, silica, and mixtures of these.

In a twelfth aspect, the invention is directed to the formed plastic part according to any one of the previous eleven paragraphs, wherein the formed plastic part is selected from the group consisting of a formed electrical part, a formed electronic part, and a formed household appliance part.

In a thirteenth aspect, the invention is directed to a process of recycling the formed plastic part according to any one of the previous twelve paragraphs, the process comprising: (a1) separating the sacrificial section from the recyclable section of the formed plastic part and discarding the sacrificial section; (a2) removing and discarding the at least one protrusion, if present, (b) mechanically shredding the recyclable section to obtain plastic fragments; (c) at least one of cleaning, sanitizing, and sorting the plastic fragments; (d) optionally, subjecting the plastic fragments to at least one of pyrolysis and chemolysis to obtain a monomer; (e) polymerizing the monomer to produce a recyclate polymer, and (f) optionally, pelletizing the recyclate polymer.

In a fourteenth aspect, the invention is directed to the process according to the previous paragraph, wherein removing the at least one protrusion comprises one selected from the group consisting of striking the top side of the at least one protrusion with a solid punch and hammer, striking the rear side of the at least one protrusion with a solid punch and hammer, striking the top side of the at least one protrusion with a shear blade, and drilling the rear side of the at least one protrusion with a drill press.

In a fifteenth aspect, the invention is directed to the process according to one of the previous two paragraphs further including a step of combining a portion of the recyclate polymer with a portion of virgin resin.

## Claims

**1.** A formed plastic part comprising:

a sacrificial section; and
a recyclable section,
wherein the sacrificial section and the recyclable section are separated by at least one stress concentrator partially extending into the formed plastic part, and
wherein the at least one stress concentrator is arranged in a pattern selected from the group consisting of a line, a groove, a triangle, a square, a rectangle, a pentagon, a hexagon, a heptagon, an octagon, a nonagon, a decagon, a rhombus, and a circle.

**2.** The formed plastic part according to claim 1, wherein the at least one stress concentrator extends completely through the formed plastic part.

**3.** The formed plastic part according to one of claims 1 and 2, wherein the sacrificial section further comprises one selected from the group consisting of electronic components, circuit boards, glues, paints, coatings, metal buses, and combinations thereof.

4. The formed plastic part according to any one of claims 1 to 3, wherein the sacrificial section comprises at least one protrusion having a top side and a rear side.

5. The formed plastic part according to any one of claims 1 to 4, wherein the at least one protrusion comprises a metal-threaded insert.

6. The formed plastic part according to any one of claims 1 to 5, wherein the plastic comprises a thermoplastic.

7. The formed plastic part according to claim 6, wherein the thermoplastic comprises a polycarbonate.

8. The formed plastic part according to claim 7, wherein the polycarbonate comprises a homopolycarbonate.

9. The formed plastic part according to one of claims 7 and 8, wherein the polycarbonate comprises a thermally conductive polycarbonate.

10. The formed plastic part according to any one of claims 7 to 9, wherein the polycarbonate comprises a blend with one selected from the group consisting of acrylonitrile-styrene-butadiene (ABS), acrylonitrile-styrene-acrylate (ASA), styrene-acrylonitrile (SAN), polyethylene terephthalate (PET), polybutylene terephthalate (PBT).

11. The formed plastic part according to any one of claims 6 to 10, wherein the thermoplastic contains a filler selected from the group consisting of glass fibers, carbon fibers, cellulosics, graphite, graphene, carbon nanotubes, chalk, quartz powder, titanium dioxide, silicates, talc, wollastonite, montmorillonite, kaolin, zeolite, vermiculite, aluminium oxide, silica, and mixtures of these.

12. The formed plastic part according to any one of claims 1 to 11, wherein the formed plastic part is selected from the group consisting of a formed electrical part, a formed electronic part, and a formed household appliance part.

13. A process of recycling the formed plastic part according to any one of claims 1 to 12, the process comprising:

(a1) separating the sacrificial section from the recyclable section of the formed plastic part and discarding the sacrificial section;
(a2) removing and discarding the at least one protrusion, if present,
(b) mechanically shredding the recyclable section to obtain plastic fragments;
(c) at least one of cleaning, sanitizing, and sorting the plastic fragments;
(d) optionally, subjecting the plastic fragments to at least one of pyrolysis and chemolysis to obtain a monomer;
(e) polymerizing the monomer to produce a recyclate polymer, and
(f) optionally, pelletizing the recyclate polymer.

14. The process according to claim 13, wherein removing the at least one protrusion comprises one selected from the group consisting of striking the top side of the at least one protrusion with a solid punch and hammer, striking the rear side of the at least one protrusion with a solid punch and hammer, striking the top side of the at least one protrusion with a shear blade, and drilling the rear side of the at least one protrusion with a drill press.

15. The process according to one of claims 13 and 14 further including a step of combining a portion of the recyclate polymer with a portion of virgin resin.

Europäisches Patentamt
European Patent Office
Office européen des brevets

# EUROPEAN SEARCH REPORT

Application Number
EP 24 15 6461

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| E | WO 2024/091778 A1 (COVESTRO LLC [US]) 2 May 2024 (2024-05-02) * paragraphs [0078], [0086], [0087], [0092], [0093], [0099], [0113]; claims; figures 4,5 * | 1-9, 11-13,15 | INV. B29B17/02 B29B17/04 ADD. B29B17/00 B29K69/00 B29L31/34 |
| E | WO 2024/091776 A1 (COVESTRO LLC [US]) 2 May 2024 (2024-05-02) * paragraphs [0095] - [0096]; claims; figures 5,6 * | 1-9, 11-13 | |
| X | DE 10 2014 206558 A1 (BOSCH GMBH ROBERT [DE]) 8 October 2015 (2015-10-08) * paragraphs [0022] - [0025]; claims; figures 1,2,6 * | 1-12 | |
| X | WO 2022/152560 A1 (COVESTRO DEUTSCHLAND AG [DE]) 21 July 2022 (2022-07-21) * claims; examples * * page 5, line 24 - page 6, line 33 * * page 26, line 16 - page 27, line 2 * | 1-15 | TECHNICAL FIELDS SEARCHED (IPC) |
| X | WO 2021/063551 A1 (SIEMENS AG [DE]) 8 April 2021 (2021-04-08) * page 7, line 29 - page 8, line 31; figures 1-3 * | 1-12 | B29B B29K B29L H05K H04M B29C |
| A | WO 2022/220688 A2 (TNO [NL]) 20 October 2022 (2022-10-20) * claims; figures; examples * | 1-15 | |

-/--

The present search report has been drawn up for all claims

| Place of search | Date of completion of the search | Examiner |
|---|---|---|
| Munich | 12 July 2024 | Dossin, Maxime |

1

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 24 15 6461

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | HAHNSEN H ET AL: "DESIGN FUR RECYCLING. ÖDESING FOR RECYCLING", KUNSTSTOFFE, CARL HANSER VERLAG, MUNCHEN, DE, vol. 86, no. 8, 1 August 1996 (1996-08-01), pages 1172-1175, XP000599769, ISSN: 0023-5563 * the whole document * ----- | 1-15 | |
| T | AL-SALEM S M ET AL: "Recycling and recovery routes of plastic solid waste (PSW): A review", WASTE MANAGEMENT, ELSEVIER, NEW YORK, NY, US, vol. 29, no. 10, 1 October 2009 (2009-10-01), pages 2625-2643, XP026437374, ISSN: 0956-053X [retrieved on 2009-07-03] * see sections "3. Mechanical recycling" and "4. Chemical recycling" * ----- | 13-15 | |
| | | | TECHNICAL FIELDS SEARCHED (IPC) |

1 The present search report has been drawn up for all claims

| Place of search | Date of completion of the search | Examiner |
|---|---|---|
| Munich | 12 July 2024 | Dossin, Maxime |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

page 2 of 2

## ANNEX TO THE EUROPEAN SEARCH REPORT ON EUROPEAN PATENT APPLICATION NO. EP 24 15 6461

This annex lists the patent family members relating to the patent documents cited in the above-mentioned European search report. The members are as contained in the European Patent Office EDP file on The European Patent Office is in no way liable for these particulars which are merely given for the purpose of information.

12-07-2024

| Patent document cited in search report | Publication date | Patent family member(s) | Publication date |
|---|---|---|---|
| WO 2024091778 A1 | 02-05-2024 | NONE | |
| WO 2024091776 A1 | 02-05-2024 | NONE | |
| DE 102014206558 A1 | 08-10-2015 | CN 104981106 A | 14-10-2015 |
| | | DE 102014206558 A1 | 08-10-2015 |
| | | JP 6646943 B2 | 14-02-2020 |
| | | JP 2015201634 A | 12-11-2015 |
| WO 2022152560 A1 | 21-07-2022 | CN 116669939 A | 29-08-2023 |
| | | EP 4277784 A1 | 22-11-2023 |
| | | US 2024107713 A1 | 28-03-2024 |
| | | WO 2022152560 A1 | 21-07-2022 |
| WO 2021063551 A1 | 08-04-2021 | CN 114557145 A | 27-05-2022 |
| | | EP 3797962 A1 | 31-03-2021 |
| | | EP 3996894 A1 | 18-05-2022 |
| | | US 2022407275 A1 | 22-12-2022 |
| | | WO 2021063551 A1 | 08-04-2021 |
| WO 2022220688 A2 | 20-10-2022 | CN 117941474 A | 26-04-2024 |
| | | EP 4142438 A1 | 01-03-2023 |
| | | EP 4397142 A2 | 10-07-2024 |
| | | WO 2022220688 A2 | 20-10-2022 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20230245913 A, Zaato
- US 5097002 A
- US 5340905 A
- US 5717057 A
- US 6596840 B
- US 6740730 B
- US 7071284 B
- US 2991273 A
- US 2999835 A
- US 2999846 A
- US 3148172 A
- US 3271367 A
- US 4982014 A
- DE 2036052 A
- DE 3832396 A
- FR 1561518 A1
- GB 1122003 A
- GB 1229482 A
- GB 1341318 A
- GB 1367790 A
- US 5288778 A
- US 5821380 A
- US 5883165 A
- US 7074351 B
- US 7169834 B
- US 8153239 B
- US 20050165148 A
- US 3644574 A
- DE 2035390
- DE 2248242
- GB 1409275 A
- US 2465319 A, Winfield
- US 2597643 A

### Non-patent literature cited in the description

- Chemistry and Physics of Polycarbonates. **SCHNELL**. Polymer Reviews. Interscience Publishers, 1964, vol. 9
- Polycarbonates. **D. FREITAG** ; **U. GRIGO** ; **P.R. MÜLLER** ; **H. NOUVERTNÉ** ; **BAYER AG**. Encyclopedia of Polymer Science and Engineering. 1988, vol. 11, 648-718
- Polycarbonate'' [Polycarbonates] in BeckerBraun, Kunststoff-Handbuch [Plastics Handbook. **U. GRIGO** ; **K. KIRCHNER** ; **P.R. MÜLLER**. Polycarbonate, Polyacetale, Polyester, Celluloseester [Polycarbonates, Polyacetals, Polyesters, Cellulose Esters. Carl Hanser Verlag, 1992, vol. 3/1, 117-299
- **H. SCHNELL**. Chemistry and Physics of Polycarbonates,. Interscience Publishers, 1964, 28-102
- **D.G. LEGRAND** ; **J.T. BENDLER**. Handbook of Polycarbonate Science and Technology. Marcel Dekker, 2000, 72
- Plastics Additives Handbook. Hanser Verlag, 2000
- *CHEMICAL ABSTRACTS*, 23949-66-8
- **W. SCHOLTAN** ; **H. LANGE**. *Colloid and Polymer Science*, 1972, vol. 250, 782-796
- *Ullmann's Encyclopedia of Chemical Technology*, 1980, vol. 19, 280